(19) **Europäisches Patentamt / European Patent Office / Office européen des brevets**

(11) **EP 1 254 535 B1**

(12) **FASCICULE DE BREVET EUROPEEN**

(45) Date de publication et mention de la délivrance du brevet:
**25.04.2007 Bulletin 2007/17**

(21) Numéro de dépôt: **01907641.3**

(22) Date de dépôt: **19.01.2001**

(51) Int Cl.:
*H04L 12/18* (2006.01)    *H04L 12/28* (2006.01)
*H04L 29/06* (2006.01)    *H04N 7/088* (2006.01)
*H04H 1/02* (2006.01)

(86) Numéro de dépôt international:
**PCT/FR2001/000176**

(87) Numéro de publication internationale:
**WO 2001/054349 (26.07.2001 Gazette 2001/30)**

(54) **PROCEDE ET SYSTEME POUR LA DIFFUSION DE DONNEES EN BOUCLE**

VERFAHREN UND SYSTEM ZUR SCHLEIFENDATENRUNDFUNKSENDUNG

METHOD AND SYSTEM FOR LOOP DATA DISTRIBUTION

(84) Etats contractants désignés:
**AT BE CH CY DE DK ES FI FR GB GR IE IT LI LU MC NL PT SE TR**

(30) Priorité: **20.01.2000 FR 0000683**

(43) Date de publication de la demande:
**06.11.2002 Bulletin 2002/45**

(73) Titulaire: **Auteuil Participation et Conseil
75016 Paris (FR)**

(72) Inventeurs:
• **REMY, Christophe
F-75016 Paris (FR)**
• **REMY, Pierre
F-75016 Paris (FR)**
• **REMY, Maurice
F-75016 Paris (FR)**

(74) Mandataire: **Callon de Lamarck, Jean-Robert
Cabinet Régimbeau
20, rue de Chazelles
75847 Paris cedex 17 (FR)**

(56) Documents cités:
**US-A- 5 524 001        US-A- 5 842 010**

**Description**

La présente invention est relative à la diffusion de données en boucle.

Plus particulièrement, l'invention trouve avantageusement application pour la radiodiffusion de données en boucle à destination d'une pluralité de terminaux portatifs équipant des utilisateurs se trouvant dans une zone donnée.

La transmission de données en boucle est classiquement connue et a notamment été utilisée en France dans les systèmes de télétexte.

Un problème généralement rencontré avec la diffusion de données en boucle est celui du temps d'accès.

Un utilisateur, pour avoir accès à une page particulière, doit en effet attendre que la partie du fichier correspondant à ce qu'il recherche se présente et soit acquise par son récepteur.

Des méthodes tendant à minimiser ce temps d'accès ont déjà été proposées.

Notamment, le brevet US 5.842.010 propose une méthode pour la transmission en boucle de données - qui sont destinées à s'afficher sur des écrans de terminaux portables récepteurs - selon laquelle lesdites données sont diffusées dans un ordre qui est déterminé en fonction d'une analyse statistique sur les besoins des utilisateurs. L'analyse statistique peut être réalisée à partir des demandes d'informations renvoyées par les utilisateurs sur le système qui diffuse les données.

Toutefois, cette méthode n'est pas optimale et n'a au demeurant d'intérêt que dans la mesure où le système de diffusion de données utilisé oblige systématiquement chaque utilisateur à prendre connaissance des données diffusées à partir d'une même première page d'écran diffusée dans la boucle de données.

Par ailleurs, il est également connu, notamment pour les systèmes de télétexte précités, de répéter dans la boucle de diffusion ceux des blocs de données qui sont les plus fréquemment consultés.

On notera toutefois que dans les systèmes de télétexte, la boucle de diffusion est généralement figée et ne connaît pas d'évolution dans le temps.

PRESENTATION DE L'INVENTION

L'invention propose quant à elle un procédé de diffusion de données en boucle avec lequel les temps d'accès des utilisateurs sont encore améliorés.

A cet effet, l'invention concerne un procédé pour la diffusion en boucle d'une pluralité de blocs de données qui correspondent à des objets ou à des fragments ou agrégats d'objets tels que des messages alphanumériques et/ou des pages d'écran et/ou des objets graphiques s'intégrant dans des pages d'écrans et/ou des séquences sonores, destinés à être restitués par des moyens de restitution dont disposent des utilisateurs, caractérisé en ce qu'on répartit les blocs de données en les empilant selon plusieurs piles correspondant à des priorités de diffusion différentes et en ce qu'on répète l'opération consistant à prélever en sortie de chaque pile un nombre de blocs de données qui est fonction de la priorité de diffusion de ladite pile et à diffuser les blocs de données ainsi prélevés, les blocs de données prélevés en sortie de chaque pile étant, à chaque itération, ré-empilés en entrée de celle-ci.

Un tel procédé est avantageusement complété par les différentes caractéristiques suivantes prises seules ou selon toutes leurs combinaisons techniquement possibles :

- on reçoit en temps réel des informations sur l'intérêt porté par les utilisateurs aux différents objets diffusés et on modifie les nombres de blocs de données prélevés dans une pile et/ou on change les blocs de données de pile en fonction de ces informations ;
- les piles sont au nombre de 3 ou 4 ;
- les blocs de données diffusés ont une taille inférieure à 400 octets utiles.
- on classe les blocs de données à diffuser par ordre de priorité de consultation, on divise la liste ainsi constituée en K piles de nombre de blocs de données sensiblement égales et on diffuse les blocs de données de chaque pile avec une fréquence égale à ou voisine de

$$f_j = \frac{B}{t} \frac{\sqrt{\pi_j}}{\sum_{j=1}^{K} \sqrt{\pi_j}}$$

où j désigne l'indice de la pile, B la capacité de diffusion, t la taille des piles et
où

$$\pi_j = \sum_{i=1}^{M} p_i$$

$p_i$ étant la probabilité de consultation d'un objet décrit en tout ou partie par le bloc de données i, M étant le nombre de blocs de données dans une pile.

- les nombres $a_j$ de blocs de données prélevés à chaque itération sont tels qu'ils minimisent

$$\varepsilon = \left( \sum_j a_j \right) \sum_j \frac{\pi_j}{a_j} - \left( \sum_j \sqrt{\pi_j} \right)^2$$

- le nombre M de blocs de données dans chaque pile est choisi multiple de chacun des nombres $a_j$.
- on introduit au moins un bloc de données de bourrage dans au moins une pile.
- le nombre $a_j$ est choisi inférieur ou égal à 9.
- des objets communs à plusieurs écrans sont transmis une seule fois.
- ces objets sont transmis avec un bloc de données de page d'accueil.

L'invention propose également un système de diffusion de données en boucle comportant des moyens pour la radio-diffusion de blocs de données dans une zone donnée, une pluralité de terminaux portatifs aptes à recevoir les blocs de données ainsi radio-diffusés, des moyens de traitement qui gèrent la diffusion desdites données, caractérisé en ce que lesdits moyens de traitement mettent en oeuvre un procédé du type précité.

## PRESENTATION DES FIGURES

D'autres caractéristiques et avantages de l'invention ressortiront encore de la description qui suit. Cette description est purement illustrative et non limitative. Elle doit être lue en regard des planches de dessins annexées sur lesquelles :

- la figure 1 est une représentation schématique d'un système conforme à un mode de réalisation possible de l'invention ;
- la figure 2 illustre une architecture possible pour ce mode de réalisation ;
- la figure 3 illustre le mécanisme d'optimisation de la diffusion des informations ;
- la figure 4 est un graphe sur lequel on a porté un exemple de répartition de probabilités pour un certain nombre d'objets à diffuser.

## DESCRIPTION D'UN MODE DE REALISATION ET DE MISE EN OEUVRE

### *Architecture générale*

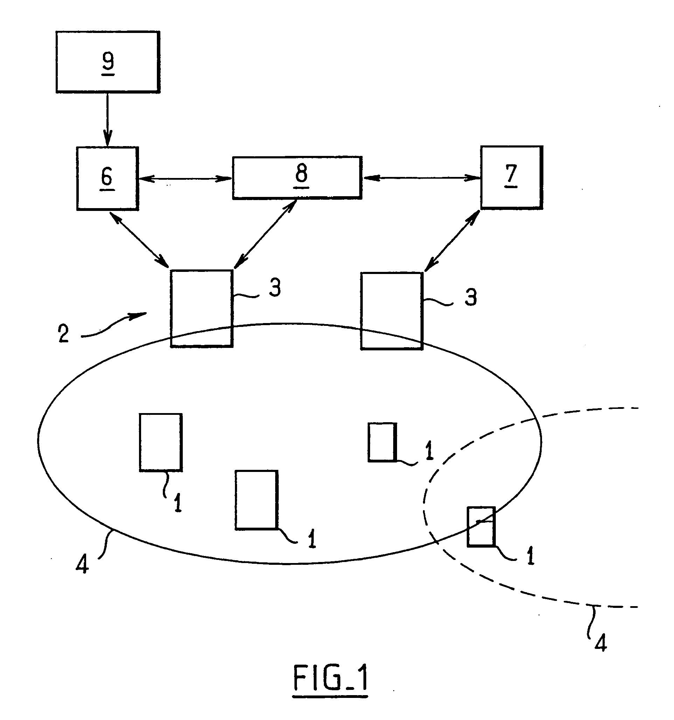

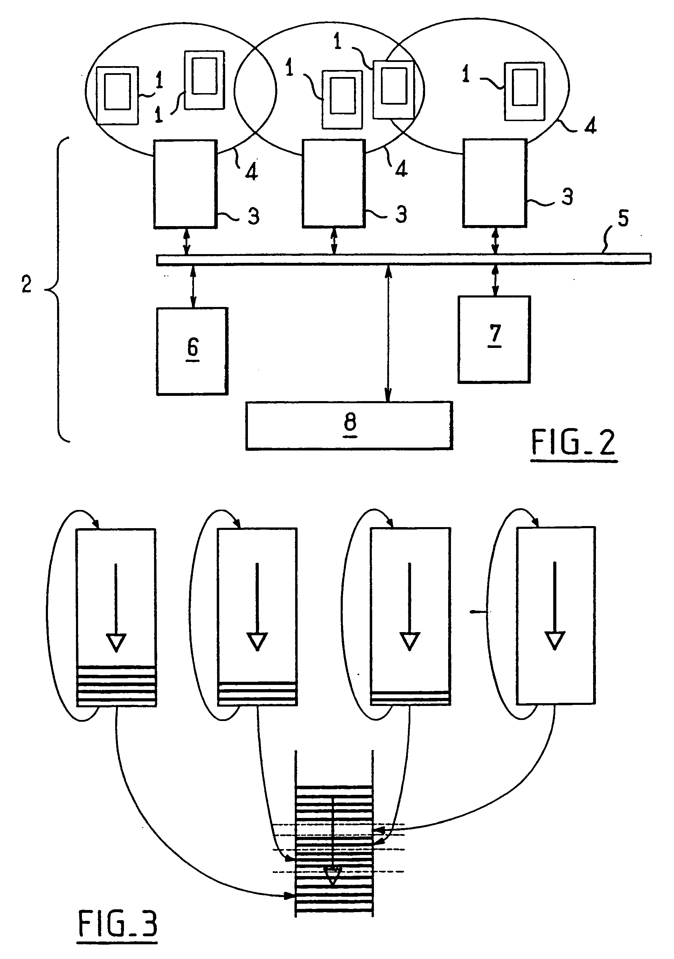

Le système qui est représenté sur la figure 1 comporte une pluralité de terminaux récepteurs 1 et une infrastructure 2 pour la radio diffusion de données en boucle à destination de ces terminaux 1.
Ces terminaux 1 sont par exemple des ordinateurs de poche du type de ceux commercialisés par la société 3COM sous la dénomination « Palm » ou du type de ceux utilisant le système d'exploitation Windows CE et commercialisés par les sociétés CASIO et COMPAQ sous les dénominations respectives « Cassiopeia » et « Aero ».
Ils sont munis de moyens leur permettant la réception des données radio diffusées en boucle par l'infrastructure 2 et l'émission de données à destination de cette infrastructure.
Ces moyens comportent notamment une antenne pour la réception de signaux radio-électriques, un modem correspondant à la norme 802.11 et un logiciel adapté au système et dont les fonctionnalités se comprendront à la lecture de ce qui suit.
L'infrastructure 2 comprend une pluralité de bornes de diffusion 3 qui définissent ensemble, dans une zone où l'on souhaite que les services proposés par le système soient accessibles, une ou plusieurs cellules de couverture 4 qui se recouvrent éventuellement partiellement.
Les différentes bornes de diffusion 3 sont reliées entre elles par un réseau filaire 5 (figure 2) de type Ethernet et sont équipées de moyens de diffusion radiofréquence, qui traitent les informations reçues du réseau par lesdites bornes pour les diffuser selon la norme 802.11 précitée.

Les données destinées à être diffusées en boucle sont notamment transmises auxdites bornes 3 par l'intermédiaire d'un ou plusieurs serveurs de diffusion 6, connecté au réseau 5, qui transmet sur celui-ci en mode « multicast » les données destinées à être diffusées.

Le système comporte en outre un ou plusieurs serveurs transactionnels 7 qui transmettent et reçoivent, par l'intermédiaire du réseau 5, des données en mode « unicast » qui correspondent à des transactions entre les terminaux 1 et le système, les bornes 3 comportant des moyens leur permettant de recevoir des données radio-diffusées par les terminaux 1 et de les retransmettre sur le réseau 5.

Par ailleurs, le système comporte également un serveur d'administration 8 - également connecté au réseau 5 - qui supervise le fonctionnement des différentes bornes 3 et des serveurs 6 et 7 et les configure.

Si un mode d'adressage IP dynamique est retenu, le système peut également comporter un serveur d'adressage complémentaire.

### *Présentation du traitement mis en oeuvre par le serveur de diffusion*

Le processus de diffusion mis en oeuvre par le ou les serveurs de diffusion 6 consiste en la transmission périodique par les bornes 3 vers les terminaux récepteurs 1 de blocs de données, qui correspondent à des objets qui doivent être restitués au niveau des terminaux 1 et qui sont par exemple des messages alphanumériques et/ou des pages d'écran et/ou des objets graphiques s'intégrant dans des pages d'écrans et/ou des séquences sonores.

Les blocs de données diffusés ont une taille maximale de 400 octets utiles, ce qui limite les risques d'erreurs de transmission.

Un processus de fragmentation/défragmentation peut le cas échéant être mis en oeuvre pour la transmission d'objets dont la description requiert un nombre d'octets supérieur.

La succession de blocs de données diffusée est actualisée en temps réel sous le pilotage du serveur de diffusion 6 en tenant compte d'une statistique qui est par exemple une statistique sur la fréquence de consultation des différentes pages d'écran par les utilisateurs, l'objectif de ce pilotage étant de permettre de faire parvenir le plus rapidement possible aux utilisateurs les messages alphanumériques, pages d'écran, séquences sonores, etc., qui sont susceptibles de les intéresser.

Cette statistique est établie à partir de rapports de consultation qui sont transmis périodiquement par le terminal aux serveurs de diffusion par l'intermédiaire des bornes 3. Ces rapports qui donnent la liste des écrans consultés par l'utilisateur du terminal depuis l'envoi du dernier rapport permettent aux serveurs de diffusion de connaître en temps réel la statistique de consultation des écrans.

Chaque terminal portatif 1 stocke et met à jour les différents blocs de données au fur et à mesure qu'il les reçoit. Il met en veille son modem radio dès que l'ensemble des blocs de données a été correctement reçu et stocké.

Le serveur de diffusion 6 reçoit, de stations d'édition 9 (figure 1), auxquelles il est par exemple relié par le réseau 5, une série de blocs de données (fichiers) décrivant les objets à diffuser, ainsi qu'un fichier d'édition et de consignes.

Le serveur 6 répartit ces blocs de données à diffuser selon plusieurs piles qui correspondent chacune à une classe de priorité différente.

A chacune de ces classes de priorité correspond une fréquence nominale de diffusion.

Des valeurs d'initialisation - qui sont par exemple fonctions de statistiques antérieures - sont attribuées par l'administrateur du service à ces fréquences de diffusion, puis ces fréquences de diffusion sont gérées de manière dynamique à partir des comptes rendus de consultation émis par les terminaux, si le mode dynamique a été sélectionné.

Après avoir réparti les blocs de données par classes, le serveur procède, à l'intérieur de chaque classe à l'agrégation des blocs dont la taille est inférieure à 80% de la taille maximale afin de réduire le poids relatif de l'en-tête UDP/IP ou TCP/IP dans la transmission. Cette agrégation consiste à encapsuler deux ou plusieurs objets dans un même bloc de données (même trame UDP). Elle ne s'applique pas aux messages de contrôle et de management qui sont diffusés avec les blocs de données, par exemple sous forme d'un préfixe au début de chaque trame envoyée.

Ainsi, dans chacune des piles qui correspondent aux différentes classes de priorité est stockée une succession de blocs de données, chacun de ces blocs correspondant à des objets ou à des fragments ou agrégats d'objets. Les différents blocs de données d'une même pile sont diffusés à la fréquence de la classe de priorité à laquelle ladite pile correspond.

Pour constituer la pile de diffusion qui est vidée régulièrement à destination des bornes de diffusion 3, le serveur 6 prélève successivement dans chaque classe un certain nombre de blocs de données. Cette opération est itérée en permanence.

Le nombre de prélèvement dans une classe est différent d'une classe à l'autre ; il est d'autant plus élevé que la priorité de la classe est élevée.

La figure 3 résume ce mécanisme. Dans l'exemple choisi, les nombres de blocs de données choisis à chaque boucle sont les suivants :

| Classe 0 | Classe 1 | Classe 2 | Classe 3 |
|----------|----------|----------|----------|
| 5 | 3 | 2 | 1 |

Comme cela a été indiqué précédemment, à l'initialisation du système, les fréquences de diffusion cible des classes sont fixées par l'administrateur, selon un modèle prédéfini qui tient par exemple compte de statistiques antérieures.

Au fur et à mesure que les comptes rendus de consultation parviennent au serveur, celui-ci peut, si le mode dynamique a été sélectionné :

- changer la classe de certains objets ou blocs de données si leur fréquence de consultation s'écarte trop de celle des autres blocs de données constituant la classe en question,
- modifier la fréquence de diffusion des classes pour optimiser le temps d'accès.

Ces modifications sont réalisées après un filtrage permettant de s'assurer que l'évolution des fréquences de consultation est bien un phénomène durable et non un aléa statistique.

Un exemple détaillé de traitement d'optimisation possible va maintenant être décrit.

*Exemple détaillé de traitement d'optimisation*

Principe

Les nombres de prélèvement des différentes classes de priorité sont obtenus en recherchant la solution en nombres entiers donnant des fréquences de diffusion des messages les plus proches des valeurs théoriques optimisant le temps moyen d'accès.

Plus précisément, l'optimisation mise en oeuvre par le système proposé par l'invention consiste à diffuser chaque bloc de données i avec une fréquence aussi proche que possible d'une fréquence théorique $f_i$ qui vérifie :

$$f_i = \frac{B}{\sum_{i=1}^{N} \sqrt{p_i t_i}} \sqrt{\frac{p_i}{t_i}}$$

où N est le nombre de messages du service
$t_i$ la taille du bloc de données i en K∅,
$p_i$ la probabilité de consultation d'un objet décrit en tout ou partie par le bloc de données i;
et où B est la capacité en K∅/s de la portion du canal affectée à la diffusion (CFP).

On démontre en effet que cette probabilité $f_i$ permet d'optimiser le temps moyen d'accès sur l'ensemble des écrans sous la contrainte de rester à l'intérieur de la capacité de diffusion disponible sur le réseau.

Le temps moyen d'accès optimisé est alors

$$T_{opt} = \frac{1}{2B}\left(\sum_{i=1}^{N} \sqrt{p_i t_i}\right)^2$$

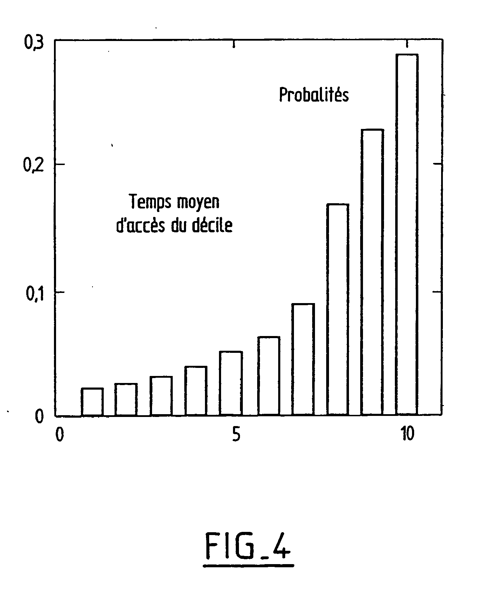

Avec une répartition de probabilités de consultation typique comme celle du graphe de la figure 4 (répartition de probabilités par décile), une taille moyenne des données décrivant les écrans de 15 K∅, l'amélioration du temps moyen d'accès par rapport à une diffusion uniforme est d'environ 25%, cette amélioration atteint 60% pour le premier décile des écrans les plus consultés.

Le prix à payer lorsque cette stratégie d'optimisation est utilisée seule est l'accroissement du temps d'accès aux écrans les moins consultés.

Le tableau suivant résume les résultats des simulations pour un service de cent écrans et pour un débit du réseau de 100 K∅/s.

| | Temps moyen sans optimisation | Temps moyen optimisé | Temps moyen 1° décile | Temps moyen dernier décile |
|---|---|---|---|---|
| Secondes | 7,22 | 5,62 | 2,87 | 16,67 |
| Rapport au temps moyen sans optimisation | 1 | 0,78 | 0,40 | 2,31 |

Mise en oeuvre pratique

*Constitution des piles*

En pratique, les blocs de données à diffuser sont classés par ordre de priorité de consultation.

La liste ainsi classée est ensuite divisée en K piles égales (ou de tailles aussi voisines que possible). Ainsi, si N est le nombre de blocs de données à diffuser, E la fonction partie entière, les E(N/K) premiers blocs de la liste sont regroupés dans une première pile, puis les E(N/K) blocs suivants sont regroupés dans une deuxième pile, etc..

Tous les blocs d'une même pile ainsi constituée sont ensuite diffusés avec une fréquence de répétition aussi voisine que possible de la fréquence théorique correspondant à la probabilité de consultation moyenne des objets de la pile.

Pour la pile j, cette probabilité correspond à la probabilité de consultation d'un bloc quelconque, soit :

$$\pi_j = \sum_{i=1}^{M} p_i$$

où $p_i$ est la probabilité de consultation du i-ème bloc de la pile et où M est le nombre de blocs dans une pile.

La fréquence théorique de diffusion dont on veut se rapprocher pour la pile j est :

$$f_j = \frac{B}{t} \frac{\sqrt{\pi_j}}{\sum_{j=1}^{K} \sqrt{\pi_j}}$$

où t est la taille (en K∅) de chacune des piles.

Le temps moyen de consultation d'un bloc de la boucle de diffusion est alors donné par:

$$T_s = \frac{1}{2B} \left( \sum_{j=1}^{K} \sqrt{\pi_j t} \right)^2 = \frac{t}{2B} \left( \sum_{j=1}^{K} \sqrt{\pi_j} \right)^2$$

le temps $T_s$ étant une approximation du temps $T_{opt}$ donné plus haut.

Le tableau ci-dessous indique les écarts d'optimisation par rapport au temps moyen pour l'exemple donné plus haut (valeurs obtenues par simulation et rapportées au temps moyen sans optimisation).

|  | Temps moyen sans optimisation | Temps moyen optimisé | Temps moyen première pile | Temps moyen dernière pile |
|---|---|---|---|---|
| Fréquence théorique | 1 | 0,72 | 0,40 (1 décile) | 2,41 (dernier décile) |
| 10 piles | 1 | 0,78 | 0,50 | 1,85 |
| 5 piles | 1 | 0,81 | 0,54 | 1,89 |
| 4 piles | 1 | 0,82 | 0,57 | 1,93 |
| 3 piles | 1 | 0,82 | 0,61 | 1,99 |

Ce tableau montre que la réduction de performance due au nombre limité de piles reste très modérée comparée à la simplification permise dans le serveur de diffusion dont on peut limiter le nombre de piles à trois ou quatre.

Par ailleurs, cette répartition en piles limite les temps d'accès excessifs pour les objets ou écrans les moins consultés qui auront les temps d'accès de la dernière pile.

*Mise en oeuvre des itérations*

A chaque itération, le serveur prélève $a_1$ blocs de données dans la pile 1, $a_2$ blocs de données dans la pile 2, ...., $a_j$ blocs de données dans la pile j, ...., $a_k$ blocs de données dans la pile K.

On démontre que la solution optimale serait obtenue avec :

$$\forall j \quad \frac{a_j}{\sum_j a_j} = \frac{\sqrt{\pi_j}}{\sum_j \sqrt{\pi_j}}$$

équation qui n'a en général pas de solution exacte en nombres entiers.

Toutefois, on choisit des nombres $a_j$ qui ne sont pas trop importants de façon :

- à ne pas trop disperser les blocs de données susceptibles de correspondre à un même objet (écran par exemple) ;
- à permettre la création d'un script de diffusion d'une longueur acceptable sans bourrage excessif (voir plus loin).

En pratique, on limitera à neuf le nombre de blocs de données prélevés à chaque cycle sur la pile la plus consultée.

Pour parvenir à une résolution approchée, on teste une table de valeurs possibles de K-uplets donnant des valeurs approchées des probabilités $\pi_j$ et minimisant l'écart entre le temps moyen d'accès réellement obtenu :

$$T_R = \frac{t}{2B}\left(\sum_j a_j\right)\sum_j \frac{\pi_j}{a_j}$$

et la valeur théorique, ce qui revient à minimiser

$$\varepsilon = \left(\sum_j a_j\right)\cdot\sum_j \frac{\pi_j}{a_j} - \left(\sum_j \sqrt{\pi_j}\right)^2$$

*Utilisation d'un script de diffusion*

La mise en oeuvre de l'algorithme de diffusion est considérablement simplifiée si l'on peut remplacer le mécanisme de prélèvement sur les piles par un script comportant la liste des blocs de données à diffuser de manière cyclique, les messages de contrôle généraux et urgents étant alors diffusés prioritairement par interruption temporaire du script.

Pour cela, il est nécessaire que dans le cours de l'algorithme, toutes les piles reviennent périodiquement à la même position. Ceci n'est possible de manière simple que si le nombre m de chaque pile est un multiple de $a_1$, $a_2$, ...., $a_j$, ...$a_k$. Si cela n'est pas le cas, on ajoutera à chacune d'elles des messages de bourrage afin d'atteindre le nombre cherché.

Bien entendu, il est souhaitable de retenir de préférence des combinaisons dont le plus petit commun multiple est aussi faible que possible car le bourrage conduit à une perte d'efficacité.

Avec l'exemple de distribution de probabilités de la figure 4, les valeurs de $\pi_j$ pour trois et quatre piles (K=3,4) seraient les suivantes :

$$K = 3 \quad \pi_j \in \{0,08 \;; 0,18 \;; 0,74\}$$
$$K = 4 \quad \pi_j \in \{0,04 \;; 0,10 \;; 0,24 \;; 0,62\}$$

Le calcul de la fonction $\varepsilon$ pour ces valeurs donnent le triplet et le quadruplet à retenir pour l'établissement du script de diffusion soit :

$$K=3 \quad \{2; 3;6\} \quad ppcm=6$$
$$K=4 \quad \{2;4;6;9\} \quad ppcm=36$$

*Blocs de données communs à plusieurs écrans*

Certains objets graphiques comme des images ou des logos sont souvent présents dans plusieurs écrans. Une stratégie consiste à ne diffuser les blocs de données qui leurs correspondent, souvent de taille importante, qu'une seule fois.

Si par exemple un bloc de taille $t_c$ est commun à deux écrans diffusés avec les fréquences $f_1$ $f_2$ ($f_1 \geq f_2$), on diffuse ce bloc commun avec la fréquence la plus grande $f_1$ économisant ainsi une capacité de diffusion de $f_2 t_c$.

On notera cependant que, sauf pour l'écran le plus consulté avec lequel l'objet commun serait diffusé, ceci conduit à une augmentation du temps d'accès pour les autres écrans utilisant ce bloc de données.

L'utilisation de blocs de données communs est donc efficace pour des écrans de fréquence de diffusion différente mais elle reste pénalisante pour des écrans de même fréquence si aucune autre mesure n'est prise.

Ceci peut toutefois être compensé en utilisant à bon escient la structure des successions de pages d'écrans proposées aux utilisateurs sur un site donné pour couvrir un ou plusieurs services auxquels l'utilisateur a accès.

Lorsqu'il se connecte sur un site, tout utilisateur reçoit d'abord la page d'accueil du site, suivie du menu du site qui lui permet d'accéder aux pages d'accueil et menus des différents services présents sur le site.

Pour éviter l'accroissement des temps d'accès dus aux blocs communs, on diffuse ceux-ci en même temps que les objets graphiques décrivant la page d'accueil du service concerné s'il s'agit (cas plus vraisemblable) d'objets liés à un seul service, en même temps que les objets de la page d'accueil du site s'il s'agit d'objets utilisés par plusieurs services.

Le terminal stockera ces objets jusqu'à ce que l'utilisateur quitte le service dans le premier cas, le site dans l'autre cas.

Lorsque le terminal dispose d'une mémoire suffisante, ce qui est généralement le cas pour les ordinateurs de poche du type du « Palm » ou « Windows CE », on peut améliorer de manière importante la qualité du service à l'aide d'un cache.

Lorsqu'un utilisateur consulte un écran, il peut, en général à l'aide de boutons ou de zones sensibles, naviguer vers d'autres écrans :

- l'écran précédemment consulté ;
- le menu du service courant et du site ;
- les écrans auxquels l'écran courant peut accéder au moyen des liens associés aux actions (boutons, etc.).

Il est facile de constituer un cache pour accéder instantanément aux écrans déjà consultés. Pour la dernière catégorie d'écrans, le terminal détermine, en exploitant les liens des actions, la liste des écrans « contigus aval » de l'écran courant. Grâce ensuite aux capacités multitâches du système d'exploitation, le terminal charge ces écrans pendant que l'utilisateur consulte l'écran courant. Dans la mesure où le temps de consultation (5 à 10 secondes au minimum) est du même ordre que le temps moyen d'accès aux écrans, ce qui est le cas avec des services d'une centaine d'écrans sur un réseau local, l'accès aux écrans contigus aval apparaîtra quasi instantané à l'utilisateur.

Le terminal met en oeuvre parallèlement un processus de purge du cache pour éliminer les descriptions d'écrans qui n'appartiennent plus aux catégories ci-dessus lorsque la capacité attribuée au cache est dépassée.

*Echanges transactionnels*

Par ailleurs, le serveur de diffusion 6 ne doit pas alimenter les points d'accès que constituent les bornes 3 à un rythme supérieur à leur capacité de diffusion et doit laisser un temps suffisant au trafic occasionné par les services transactionnels, lesquels se traduisent par des échanges entre le serveur transactionnel 7 et les terminaux récepteurs 1.

Le ratio d'accès entre services diffusés et services transactionnels est fixé par l'administrateur.

On va maintenant décrire le service mis en oeuvre par le serveur transactionnel.

Dans ce service, un certain nombre d'écrans et de messages sont communs à l'ensemble des utilisateurs ; ces écrans et messages sont transmis en mode diffusé de la manière décrite aux paragraphes précédents. Les messages correspondant sont intégrés dans l'ensemble des messages diffusés.

Une borne 3 entre en mode transactionnel lorsqu'elle détecte l'émission par un terminal 1 d'une séquence destinée au serveur de transaction 7 (envoi d'un formulaire de commande, achat, requête, etc.).

Cet échange de données s'effectue en mode « unicast » avec le serveur 7 dont l'adresse IP est fournie. Il peut être précédé d'un échange de messages de contrôle et notamment de la fourniture par le terminal de son identifiant.

Les services transactionnels utilisent le même protocole pour la description des écrans que les services diffusés et sa partie interactive pour les transactions.

La structure des serveurs transactionnels est liée à la nature des services fournis. Le logiciel serveur fournit les interfaces de programmation nécessaires à la réalisation de la partie application du logiciel. Celle-ci peut être exécutée sur une machine distante tandis que la partie transactionnelle s'exécute sur une machine locale.

Dans certains cas simples elle pourra cohabiter avec le serveur de diffusion sur la même machine.

Un serveur transactionnel spécifique assure la gestion des services associés : mise à jour de la liste des utilisateurs et de leur adresse Internet, collecte sur le réseau de distribution (DS) des services effectivement diffusés, envoi par Internet des dernières versions des services aux utilisateurs avec une périodicité fixée.

De nombreuses applications peuvent être envisagées pour le procédé et le système qui viennent d'être décrits.

Le tableau suivant résume un certain nombre d'exemples d'applications avantageuses possibles :

## TABLEAU A

| Sites | Services diffusés | | | | | | | | Services transactionnels | | | | | | | |
|---|---|---|---|---|---|---|---|---|---|---|---|---|---|---|---|---|
| | Accueil & Guide | Promotions | Infos spécifiques | Météo | Inforoute | Infos touristiques | Infos gén. & locales | Bourse | Achats express | Réservations touristiques | Réservations spectacles | Jeux ciblés | Achat titres transport | Enregistr. conf. expos accueil entr. embarquem¹ | Transactions spécifiques | Paris & jeux d'argent |
| ***Commerciaux & Industriels*** | | | | | | | | | | | | | | | | |
| Centres commerciaux | X | X | X | | | X | X | | | X | X | | | | | |
| Hypermarchés | X | X | | | | X | X | | X | X | X | | | | | |
| Grands magasins traditionnels | X | X | | | | X | X | | | X | X | | | | | |
| Grandes entreprises | X | | X | | | | X | X | | | | | | | X | |
| Parcs industriels | X | | X | | X | | X | X | | | | | | | X | |
| ***Transport et tourisme*** | | | | | | | | | | | | | | | | |
| Gares | X | X | X | X | | X | X | | | X | X | X | X | | | |
| Aéroports | X | X | X | X | | X | X | X | X | X | | X | X | | X | |
| Stations de métro | X | | X | | X | X | X | X | | X | X | | | | | |
| Aires d'autoroutes | X | | | X | X | X | X | X | | X | | | | | | |
| Stations service | X | | | X | X | X | X | X | | X | | | | | | |
| Ports de plaisance | X | | X | X | | X | X | X | | X | | | | | | |
| Hôtels | X | X | X | X | X | X | X | X | | X | X | X | | | | |
| Musées | X | | X | | | X | | | | X | X | | | | | |
| ***Services*** | | | | | | | | | | | | | | | | |
| Banques | X | X | X | | | | X | X | | X | X | | X | | X | |
| Bureaux de poste | X | X | X | | | | X | X | | X | X | | X | | X | |
| Organismes sociaux (SS, ANPE,...) | X | | X | | | | X | | | | | X | | | X | |
| Hôpitaux | X | | X | | | | X | X | | | | | X | X | | |
| Universités | X | | X | X | X | X | X | X | | X | X | | X | X | | |
| Bibliothèques | X | | X | | | | X | | X | | | | | X | | |
| ***Spectacles et manifestations diverses*** | | | | | | | | | | | | | | | | |
| Conférences et expositions | X | | X | X | X | X | X | X | | X | X | X | X | X | X | |
| Parcs d'attractions | X | X | X | X | X | X | X | X | | X | X | X | X | X | X | |
| Stades | X | | X | X | X | X | | | | X | X | X | X | X | X | |
| Hippodromes | X | | X | X | | | X | | | | X | X | X | X | X | X |

**Revendications**

1. Procédé pour la diffusion en boucle d'une pluralité de blocs de données qui correspondent à des objets ou à des fragments ou agrégats d'objets tels que des messages alphanumériques et/ou des pages d'écran et/ou des objets graphiques s'intégrant dans des pages d'écrans et/ou des séquences sonores, destinés à être restitués par des moyens de restitution dont disposent des utilisateurs, **caractérisé en ce qu'**on répartit les blocs de données en les empilant selon plusieurs piles correspondant à des priorités de diffusion différentes et **en ce qu'**on répète l'opération consistant à prélever en sortie de chaque pile un nombre de blocs de données qui est fonction de la priorité de diffusion de ladite pile et à diffuser les blocs de données ainsi prélevés, les blocs de données prélevés en sortie de chaque pile étant, à chaque itération, ré-empilés en entrée de celle-ci.

2. Procédé selon la revendication 1, **caractérisé en ce qu'**on reçoit en temps réel des informations sur l'intérêt porté par les utilisateurs aux différents objets diffusés et **en ce qu'**on modifie les nombres de blocs de données prélevés dans une pile et/ou on change de pile des blocs de données en fonction de ces informations.

3. Procédé selon l'une des revendications précédentes, **caractérisé en ce que** les piles sont au nombre de 3 ou 4.

4. Procédé selon l'une des revendications précédentes, **caractérisé en ce que** les blocs de données diffusés ont une taille inférieure à 400 octets utiles.

5. Procédé selon l'une des revendications précédentes, **caractérisé en ce que** l'on classe les blocs de données à diffuser par ordre de priorité de consultation, on divise la liste ainsi constituée en K piles de nombre de blocs données sensiblement égales et on diffuse les blocs de données de chaque pile avec une fréquence égale à ou voisine de

$$f_j = \frac{B}{t} \frac{\sqrt{\pi_j}}{\sum\limits_{j=1}^{K} \sqrt{\pi_j}}$$

où j désigne l'indice de la pile, B la capacité de diffusion, t la taille des piles et
où

$$\pi_j = \sum\limits_{i=1}^{M} p_i$$

$p_i$ étant la probabilité de consultation d'un objet décrit en tout ou partie par le bloc de données i, M étant le nombre de blocs de données dans une pile.

6. Procédé selon la revendication 5, **caractérisé en ce que** les nombres $a_j$ de blocs de données prélevés à chaque itération sont tels qu'ils minimisent

$$\varepsilon = \left( \sum_j a_j \right) \cdot \sum_j \frac{\pi_j}{a_j} - \left( \sum_j \sqrt{\pi_j} \right)^2$$

7. Procédé selon la revendication 6, **caractérisé en ce que** le nombre M de blocs de données dans chaque pile est choisi multiple de chacun des nombres $a_j$.

8. Procédé selon la revendication 7, **caractérisé en ce qu'**on introduit au moins un bloc de données de bourrage dans au moins une pile.

9. Procédé selon l'une des revendications 6 à 8, **caractérisé en ce que** le nombre $a_j$ est choisi inférieur ou égal à 9.

10. Procédé selon l'une des revendications précédentes, **caractérisé en ce que** des objets communs à plusieurs écrans sont transmis une seule fois.

11. Procédé selon la revendication 10, **caractérisé en ce que** ces objets sont transmis avec un bloc de données de page d'accueil.

12. Système de diffusion de données en boucle comportant des moyens pour la radio-diffusion de blocs de données dans une zone donnée, une pluralité de terminaux portatifs aptes à recevoir les blocs de données ainsi radio-diffusés, des moyens de traitement qui gèrent la diffusion desdites données, **caractérisé en ce que** lesdits moyens de traitement mettent en oeuvre un procédé selon l'une des revendications précédentes.

**Claims**

1. Method for the loop broadcasting of a plurality of data blocks which correspond to objects or to fragments or aggregates of objects such as alphanumeric messages and/or screen pages and/or graphical objects integrated into screen pages and/or sound sequences, and intended to be restored by restoring means with which users are provided, **characterized in that** the data blocks are distributed by stacking them into several stacks corresponding to different broadcasting priorities and **in that** the operation consisting in sampling at the output of each stack a number of data blocks which is dependent on the priority of broadcasting of said stack and in broadcasting the data blocks thus sampled is repeated, the data blocks sampled at the output of each stack being, at each iteration, restacked at the input thereof.

2. Method according to Claim 1, **characterized in that** information regarding the interest shown by the users in the various objects broadcast is received in real time and **in that** the numbers of data blocks sampled from a stack are modified and/or a change of data block stack is effected as a function of this information.

3. Method according to either of the preceding claims, **characterized in that** the number of stacks is 3 or 4.

4. Method according to one of the preceding claims, **characterized in that** the data blocks broadcast have a size of less than 400 useful bytes.

5. Method according to one of the preceding claims, **characterized in that** the data blocks to be broadcast are classed in order of priority of consultation, the list thus constructed is divided into K stacks with a substantially equal number of data blocks and the data blocks of each stack are broadcast with a frequency equal to or nearly equal to

$$f_j = \frac{B}{t} \frac{\sqrt{\pi_j}}{\sum\limits_{j=1}^{K} \sqrt{\pi_j}}$$

where j denotes the index of the stack, B the broadcasting capacity, t the size of the stacks and where

$$\pi_j = \sum_{i=1}^{M} p_i$$

$p_i$ being the probability of consultation of an object described wholly or partly by the data block i, M being the number of data blocks in a stack.

6. Method according to Claim 5, **characterized in that** the numbers $a_j$ of data blocks sampled at each iteration are such that they minimize

$$\varepsilon = \left( \sum_j a_j \right) \cdot \sum_j \frac{\pi_j}{a_j} - \left( \sum_j \sqrt{\pi_j} \right)^2$$

7. Method according to Claim 6, **characterized in that** the number M of data blocks in each stack is chosen to be a multiple of each of the numbers $a_j$.

8. Method according to Claim 7, **characterized in that** at least one padding data block is introduced into at least one stack.

9. Method according to one of Claims 6 to 8, **characterized in that** the number $a_j$ is chosen less than or equal to 9.

10. Method according to one of the preceding claims, **characterized in that** objects common to several screens are transmitted once only.

11. Method according to Claim 10, **characterized in that** these objects are transmitted with a home page data block.

12. System for loop data broadcasting comprising means for the radio broadcasting of data blocks within a given area, a plurality of portable terminals able to receive the data blocks thus radio broadcast, processing means which manage the broadcasting of said data, **characterized in that** said processing means implement a method according to one of the preceding claims.

**Patentansprüche**

1. Verfahren zur Verbreitung in Schleifen einer Anzahl von Datenblöcken, die Objekten oder Teilen oder Aggregaten von Objekten entsprechen, wie etwa alphanumerischen Nachrichten und/oder Bildschirmseiten und/oder grafischen Objekten, die in Bildschirmseiten eingebaut werden, und/oder Tonsequenzen, die dafür bestimmt sind, von Wiedergabemitteln, über die Benutzer verfügen, wiedergegeben zu werden, **dadurch gekennzeichnet, daß** die Datenblöcke aufgeteilt werden, indem sie in mehreren Zellen gesammelt werden, die verschiedenen Verbreitungsprioritäten entsprechen, und **dadurch**, daß der Vorgang wiederholt wird, der darin besteht, am Ausgang jeder Zelle eine von der Verbreitungspriorität der Zelle abhängige Anzahl von Datenblöcken zu entnehmen und die so entnommenen Datenblöcke zu verbreiten, wobei die am Ausgang jeder Zelle entnommenen Datenblöcke in jeder Iteration an deren Eingang wieder zugeführt werden.

2. Verfahren nach Anspruch 1, **dadurch gekennzeichnet, daß** in Echtzeit Informationen über das Interesse empfangen werden, das die Benutzer den verschiedenen verbreiteten Objekten entgegenbringen und **dadurch**, daß in Abhängigkeit von diesen Informationen die Anzahl der aus einer Zelle entnommenen Datenblöcke verändert wird und/oder daß die Zellendatenblöcke ausgewechselt werden.

3. Verfahren nach einem der vorhergehenden Ansprüche, **dadurch gekennzeichnet, daß** es 3 oder 4 Zellen gibt.

4. Verfahren nach einem der vorhergehenden Ansprüche, **dadurch gekennzeichnet, daß** die verbreiteten Datenblöcke eine Größe von unter 400 Nutzbytes haben.

5. Verfahren nach einem der vorhergehenden Ansprüche, **dadurch gekennzeichnet, daß** die zu verbreitenden Datenblöcke in der Reihenfolge der Abrufpriorität sortiert werden, die so gebildete Liste in K Zellen mit einer im wesentlichen gleichen Anzahl von Datenblöcken eingeteilt wird und die Datenblöcke jeder Zelle mit einer Frequenz verbreitet werden, die gleich oder annähernd gleich

$$f_j = \frac{B}{t} \frac{\sqrt{\pi_j}}{\sum\limits_{j=1}^{K} \sqrt{\pi_j}}$$

ist, wobei j den Index der Zelle bezeichnet, B die Durchsatzleistung der Verbreitung, t die Größe der Zellen und

$$\pi_j = \sum\limits_{i=1}^{M} p_i$$

ist,

wobei $p_i$ die Abrufwahrscheinlichkeit eines Objekts ist, das vollständig oder zum Teil durch den Datenblock i beschrieben wird, und M die Anzahl der Datenblöcke in einer Zelle ist.

6. Verfahren nach Anspruch 5, **dadurch gekennzeichnet, daß** die Anzahlen $a_j$ der bei jeder Iteration entnommenen Datenblöcke derart sind, daß sie den folgenden Ausdruck minimieren:

$$\varepsilon = \left( \sum_j a_j \right) \cdot \sum_j \frac{\pi_j}{a_j} - \left( \sum_j \sqrt{\pi_j} \right)^2$$

7. Verfahren nach Anspruch 6, **dadurch gekennzeichnet, daß** die Anzahl M von Datenblöcken in jeder Zelle als ein Vielfaches jeder der Anzahlen $a_j$ gewählt ist.

8. Verfahren nach Anspruch 7, **dadurch gekennzeichnet, daß** wenigstens ein Auffülldatenblock in wenigstens einer Zelle eingeführt wird.

9. Verfahren nach einem der Ansprüche 6 bis 8, **dadurch gekennzeichnet, daß** die Anzahl $a_j$ kleiner oder gleich 9 gewählt wird.

10. Verfahren nach einem der vorhergehenden Ansprüche, **dadurch gekennzeichnet, daß** Objekte, die mehreren Bildschirmen gemeinsam sind, ein einziges Mal übertragen werden.

11. Verfahren nach Anspruch 10, **dadurch gekennzeichnet, daß** diese Objekte mit einem Empfangsseitendatenblock übertragen werden.

12. System zur Verbreitung von Daten in Schleifen, das Mittel zur Funk-Ausstrahlung von Datenblöcken in einer gegebenen Zone, mehrere tragbare Endgeräte, die dafür eingerichtet sind, die so ausgestrahlten Datenblöcke zu empfangen, und Verarbeitungsmittel, die die Ausstrahlung der Daten verwalten, umfaßt, **dadurch gekennzeichnet, daß** die Verarbeitungsmittel ein Verfahren gemäß einem der vorhergehenden Ansprüche einsetzen.

FIG_1

FIG.2

FIG.3

FIG_4